# EUROPÄISCHE PATENTSCHRIFT

(11) **EP 2 067 552 B1**
(45) Veröffentlichungstag und Bekanntmachung des Hinweises auf die Patenterteilung: **31.08.2011**
(21) Anmeldenummer: 08020884.6
(22) Anmeldetag: 02.12.2008
(51) Int. Cl.: B23B 27/14

(54) **Schneidwerkzeug für die spanabhebende Bearbeitung von Werkstücken**
Cutting tool for machining a workpiece
Outil de coupe destiné au traitement par enlèvement de copeaux de pièces usinées

(30) Priorität: 05.12.2007 DE 202007017088 U
(43) Veröffentlichungstag der Anmeldung: 10.06.2009
(73) Patentinhaber: Jakob Lach GmbH & Co. KG, 63452 Hanau (DE)
(72) Erfinder: Lach, Horst, 63450 Hanau (DE)
(74) Vertreter: Jochem, Bernd

(56) Entgegenhaltungen:
- EP-A- 1 023 961
- EP-A- 1 023 962
- US-A- 4 189 264

## Beschreibung

Die Erfindung betrifft ein Schneidwerkzeug für die spanabhebende Bearbeitung von Werkstücken, insbesondere aus Nichteisenmetallen oder Kunststoffe, dessen Schneidkante und angrenzende Spannfläche aus einer fest mit einer Tragschicht aus Hartmetall verbundenen ultraharten Schicht aus mono- oder polykristalinem Diamant oder polykristalinem Bornitrid bestehen, wobei die Spanfläche hinter der Schneidkante in der ultraharten Schicht einen schrägen oder konkav gerundeten Abhang, einen Boden und einen Anstieg einer Einsenkung bildet, die eine Tiefe von 0,1 bis 0,5 mm unter dem Niveau der Schneidkante erreicht.

Ein derartiges Schneidwerkzeug mit ähnlichen Maßen ist zum Beispiel aus der EP 1 023 961 A1 bekannt, die dem Oberbegriff von Anspruch 1 eugrundeliege Bei den dort gezeigten Ausführungen verbleibt die Spanfläche neben der Schneidkante 0,2 mm auf deren Niveau, bevor sie in die Einsenkung abfällt, so dass die Schneidkante nachgeschliffen werden kann. Wenn darauf verzichtet wird, kann der schräge Abhang in die Einsenkung mit einer Neigung von zum Beispiel 15 oder 20° auch schon unmittelbar hinter der Schneidkante beginnen. Als "Schneidkante" wird hier der etwa 0,02 mm breite Schneidkantenbereich bezeichnet, der den größten Teil der Schneidkraft überträgt. Die in Gleitrichtung der Späne gemessene Breite der Einsenkung hängt von der Art der Bearbeitung, z. B. Schruppen, Schlichten oder Feinschlichten, der Schnittgeschwindigkeit und von der Zähigkeit des bearbeiteten Materials ab. Grundsätzlich hat die Anordnung einer Einsenkung der Spanfläche unmittelbar hinter der Schneidkante den Vorteil, dass sich dadurch ein positive Spanwinkel ergibt, der die Schneidkraft reduziert, und außerdem bereits mit einer verhältnismäßig geringen Tiefe der Einsenkung, die innerhalb der Dicke der Diamantschicht handelsüblicher Schneidwerkzeug-Rohlinge bleibt, unter günstigen Schnittbedingungen, z. B. beim Feinschlichten, eine zum Spanbrechen ausreichende Umlenkung erzielt wird. Mit größerer Spantiefe und größerer Zähigkeit des bearbeiteten Materials nehmen jedoch die Schwierigketten zu.

Es ist weiterhin aus der EP 1 023 962 A1 ein Diamant-Schneidwerkzeug bekannt, bei dem die Spanbrecherfunktion statt durch eine Einsenkung der Spanfläche durch einen Führungskörper aus Hartmetall erreicht wird, der in einer Aussparung in der Diamantschicht auf deren Tragschicht aufgelötet ist und mit einer hinter der Schneidkante über der Spanfläche der Diamantschicht schräg ansteigenden Spanleitfläche eine Erhebung darstellt, die ohne weiteres höher sein kann als die Tiefe der Einsenkungen in die Diamantschicht bei den zuvor genannten Schneidwerkzeugen. Gleichwohl war man bestrebt, auch den Führungskörper möglichst nahe an der Schneidkante anzuordnen, um die Umlenkung der Späne so früh wie möglich in die Wege zu leiten. Wegen der Bruchgefahr an der Schneidkante ist es jedoch unmöglich, mit dem Führungskörper ebenso nahe an die Schneidkante heranzurücken wie mit dem Beginn einer Einsenkung in der Diamantschicht.

Schließlich ist in der US-A-4189264 ein aus Hartmetall bestehendes Schneidwerkzeug beschrieben, dessen Spanfläche hinter der Schneidkante einen schrägen oder konkav gerundeten Abhang einer Einsenkung bildet. An der tiefsten Stelle der Einsenkung beginnt eine Aussparung, in der ein Führungskörper mit einer Spanleitfläche befestigt ist, die mit der genannten Spanfläche einen stumpfen Winkel bildet und anschließend bis über das Niveau der Schneidkante ansteigt. Nachteilig bei der bekannten Ausführung ist, dass die Späne an der Ecke zwischen der Spanfläche und der Spanleitfläche gestaucht und in die Fuge zwischen der Spanfläche und dem Führungskörper gedrängt werden. Dies hat Materialablagerungen und verstärkten Verschließ des Schneidwerkzeugs zur Folge.

Der Erfindung liegt die Aufgabe zugrunde, ein Schneidwerkzeug der eingangs genannten Art zur Verfügung zu stellen, das jeweils in einer bestimmten Ausführung mit bestimmten Maßen einen breiteren Anwendungsbereich als die zuvor erwähnten bekannten Schneidwerkzeuge sowie einen verbesserten Schneidvorgang bietet.

Vorstehende Aufgabe wird erfindungsgemäß dadurch gelöst, dass die ultraharte Schicht unmittelbar hinter dem Anstieg der Einsenkung bis auf die Tragschicht ausgespart und in der Aussparung auf der Tragschicht ein Führungskörper befestigt ist, der sich über die ultraharte Schicht erhebt und mit einer schrägen oder konkav gerundeten Spanleitfläche versehen ist, die sich an den den Anstieg der Einsenkung bildenden Teil der Spanfläche anschließt.

Durch die vorgeschlagene Anordnung eines Führungskörpers mit einer sich über die Ebene der Schneidkante erhebenden Spanleitfläche nicht möglichst nahe an der Schneidkante, sondern in Gleitrichtung der Späne hinter einer durch die abfallend und wieder ansteigend geneigte Spanfläche gebildeten Einsenkung wird in praktisch allen Anwendungsfällen, speziell unter schwierigen Zerspannungsbedingungen, die Spanbrecherfunktion verbessert. In solchen Fällen, wo ein aufgelöteter Führungskörper mit Spanleitfläche als Spanbrecher genügt hätte, führt das neu vorgeschlagene Schneidwerkzeug zu einem verbesserten Zerspannungsvorgang, weil die Späne infolge des durch die Einsenkung erzeugten positiven Spanwinkels besser ablaufen. Es hat sich als zweckmäßig erwiesen, je nach Art der Zerspannung bzw. der Spantiefe die in Gleitrichtung der Späne gemessene Breite der Einsenkung in der Diamantschicht unterschiedlich zu wählen. Für das Feinschlichten mit einer Spantiefe von etwa 0,1 bis 0,3 mm ist eine Breite der Einsenkung zwischen der Schneidkante und dem Führungskörpers von 0,4 bis 0,6 mm vorgesehen. Dagegen empfiehlt sich für das Schlichten mit einer Spantiefe von 0,3 bis 1 mm und für das Schruppen mit einer Spanntiefe von 1 bis 3 mm eine 0,9 bis 1,2 mm breite Einsenkung, an die sich dann jeweils die Spanleitfläche des Führungskörpers anschließt. Ein Kombinationswerkzeug sowohl zum Feinschlichten als auch zum Schlichten oder Schruppen kann dadurch gewonnen werden, dass der in die Einsenkung abfallende Teil der Spanfläche im Abstand von 0,05 bis 0,3 mm von der Schneidkante eine Erhebung aufweist und hinter dieser weiter abfällt. Die kurze Einsenkung bis zu der Erhebung dient bei dieser Ausführung zur Umlenkung der Feinschlichtspäne.

Vorzugweise schließt die Spanleitfläche des Führungskörpers unmittelbar an den den Anstieg der Einsenkung bildenden Teil der Spanfläche an, und zwar mit derselben Steigung oder einer stärkeren Steigung, so dass die Späne, bevor sie gegen den Führungskörper prallen und auf der Spanleitflächen vollstandig gebrochen werden, auf der Spanfläche in der Einsenkung teilweise gebogen oder angebrochen werden. Generell lässt sich feststellen, dass der Steigungswinkel der Spanleitfläche des Führungskörpers mit Bezug auf die Ebene der Schneidkante 30 bis 60° betragen kann und meistens zwischen 40 und 50° liegen wird. Dagegen ist die Neigung der Spanfläche von der Schneidkante in die Einsenkung hinein wesentlich kleiner. Sie beträgt mit Bezug auf die Ebene der Schneidkante meistens nur etwa 15 bis 25°. Die in Gleitrichtung der Späne gemessene Breite der Spanleitfläche des Führungskörpers sollte zweckmäßigerweise größer sein als die Breite der Einsenkung in der Diamantschicht.

Nach den vorstehend genannten Richtlinien lassen sich sowohl Schneidwerkzeuge mit nur einer geradlinigen Schneidkante als auch solche mit einer V-förmigen oder über wenigstens 180° runden Schneidkante gestalten. Die Spanleitfläche des Führungskörpers verläuft jeweils parallel zur Schneidkante geradlinig, V-förmig bzw. rund. Damit ist der hauptsächliche Verlauf gemeint. Es besteht durchaus die Möglichkeit, nicht nur die Einsenkung in der Diamantschicht, sondern auch die Spanleitfläche des Führungskörpers reliefartig zu strukturieren.

Eine weitere Modifikation des Erfindungsgedankens besteht darin, dass anstelle des aufgelöteten Führungskörpers eine entsprechende Erhöhung der Diamantschicht über die Ebene der Schneidkante vorhanden ist.

Nachstehend werden Ausführungsbeispiele der Erfindung näher erläutet. Es zeigen:
- Fig. 1a: eine Draufsicht eines Schneidwerkzeugs zum Fein- schlichten mit Spanbrecherfunktion;
- Fig. 1b: eine Seitenansicht des Schneidwerkzeugs nach Fig. 1a;
- Fig. 1c: einen Ausschnitt A aus Fig. 1a in größerem Maßstab;
- Fig. 1d: einen senkrechten Querschnitt gemäß Schnittlinie C-C in Fig. 1c;
- Fig. 2: einen Querschnitt entsprechend Fig. 1d eines Schneidwerkzeugs zum Schlichten oder Schruppen;
- Fig. 3: eine Schnittansicht entsprechend Fig. 1d und Fig. 2 eines Schneidwerkzeugs, das sowohl zum Feinschlich- ten als auch zum Schlichten oder Schruppen vorgese- hen ist.

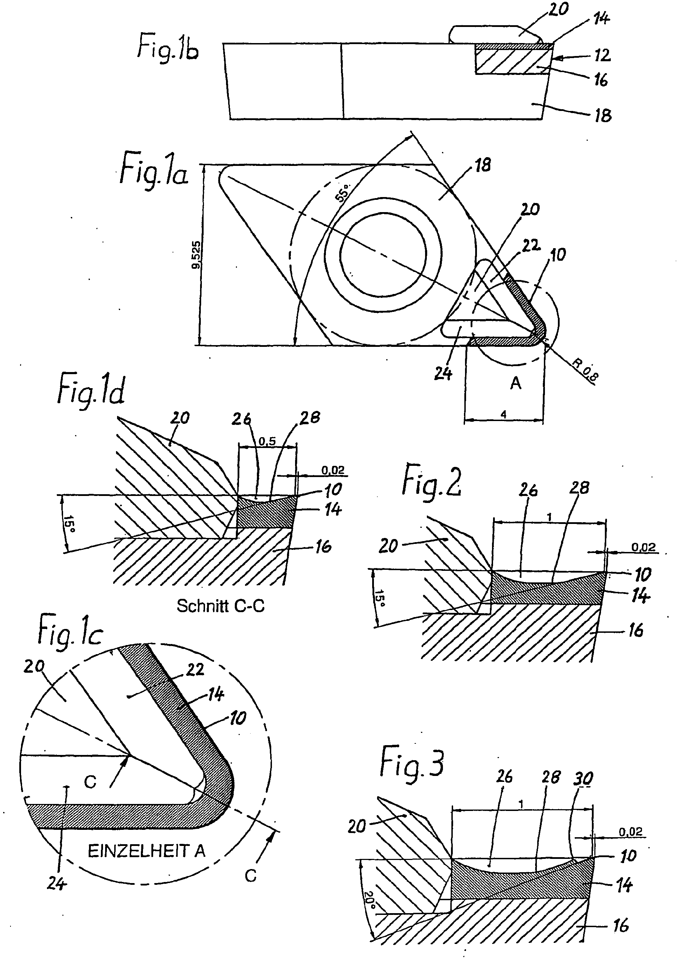

Das in Fig. 1a - d gezeigte Schneidwerkzeug entspricht in seinem grundsätzlichen Aufbau dem in der EP 1 023 962 A1 beschriebenen Schneidwerkzeug, so dass auf die dortige Beschreibung Bezug genommen werden kann. Es handelt sich im Beispielsfall um ein Schneidwerkzeug mit einer V-förmigen, an der Spitze gerundeten Schneidkante 10, die aus Diamant besteht. Der die Schneidkante 10 bildende Schneideinsatz 12 hat eine Oberflächenschicht 14 aus ultrahartem Material, zum Beispiel Diamant, die fest versintert ist mit einer Tragschicht 16 aus Hartmetall. Der Schneideinsatz 12 ist an der Tragschicht 16 mit dem Grundkörper 18 des Schneidwerkzeugs zum Beispiel durch Löten fest verbunden. Der Schneideinsatz 12 ist beispielsweise aus einem runden, scheibenförmigen, im Handel erhältlichen Rohteil mit einer Diamantschicht 14 und einer Hartmetallschicht 16 passend ausgeschnitten worden.

Mit einem bestimmten Abstand zur Schneidkante 10 ist die Diamantschicht 14 bis auf die Tragschicht 16 elektroerosiv oder mittels eines Lasers ausgespart worden. In dieser Aussparung sitzt ein in der Draufsicht im wesentlichen dreieckiger Führungskörper 20 aus Stahl oder Hartmetall, der auf der Tragschicht 16 und ggf. dem Grundkörper 18 zum Beispiel durch Löten oder Kleben befestigt ist. Wie die Zeichnung zeigt, erstrecken sich die Seitenkanten des Führungskörpers 20 parallel zu der Schneidkante 10, und die Spitze des Führungskörpers ist ebenfalls entsprechend der gerundeten Spitze der Schneidkante 10 gerundet. Wie aus Fig. 1d ersichtlich, ist die Basis des Führungskörpers 20 so angeschrägt, dass er die Wand der Aussparung in der Diamantschicht 14 nur in deren oberen Bereich berührt. Im übrigen ragt der Führungskörper 20 über die Oberfläche der Diamantschicht 14 nach oben hinaus. Seine mit 22, 24 bezeichneten Seitenflächen bilden dabei mit der Ebene der Schneidkante 10 einen Winkel von zum Beispiel 45°. Dieser Winkel tritt in Fig. 1d nicht in Erscheinung, weil der Schnitt C-C gemäß Fig. 1c auf die schräge Kante zwischen den beiden Seitenflächen bzw. Spanleitflächen 22, 24 gelegt ist. Man sieht also in Fig. 1d unmittelbar hinter der Oberfläche der Diamantschicht 14 den Anstieg der Vorderkante des Führungskörpers 20 im abgerundeten Bereich und den weiteren Anstieg längs der schrägen Kante zwischen den beiden Seitenflächen 22, 24.

Bei dem in Fig. 1a - d dargestellten Schneidwerkzeug zum Feinschlichten wird zwischen der etwa 0,02 mm breiten Schneidkante 10 und dem Führungskörper 20 eine verhältnismäßig schmale Einsenkung 26 in der Oberfläche der Diamantschicht 14 benutzt. Sie ist im Ausführungsbeispiel nur 0,5 mm breit. Die Neigung der mit 28 bezeichneten Spanfläche von der Schneidkante 10 in die Einsenkung 26 hinein beträgt zum Beispiel, wie angegeben, 15° oder zum Beispiel 20 bis 25°. Der Anstieg der Spanfläche 28 aus der Einsenkung 26 zum Führungskörper 20 hin ist steiler, bei dem gezeigten, konkav gerundeten Querschnitt der Einsenkung 26 am Übergang zur anschließenden Spanleitfläche 22 bzw. 24 des Führungskörpers 20 zum Beispiel 40°. Dieses Steigungsmaß kann sich in der Spanleitfläche 22, 24 mit gleicher Größe fortsetzen, der Anstieg der Spanleitflächen 22,24 kann aber auch steiler sein, zum Beispiel 45° betragen.

Fig. 2 zeigt eine der Fig. 1d entsprechende Schnittansicht eines Schneidwerkzeugs zum Schlichten oder Schruppen. Es unterscheidet sich dadurch von dem Feinschlichtwerkzeug gemäß Fig. 1d, dass die Spanfläche 28 zwischen der Schneidkante 10 und dem Führungskörper 20 wesentlich länger, d. h. die Einsenkung 26 wesentlich breiter und auch tiefer ist. Die Breite beträgt hier 1 mm.

Der in Fig. 3 gezeigte Querschnitt entspricht, ebenso wie Fig. 2, in seiner Lage dem Schnitt C-C nach Fig. 1c und 1d. Es handelt sich aber um ein Schneidwerkzeug, das sowohl zum Feinschlichten als auch zum Schlichten oder Schruppen eingesetzt werden soll. Um allen Anforderungen zu genügen, hat es eine verhältnismäßig breite Einsenkung von 1 mm zwischen der Schneidkante 10 und der Spanleitfläche des Führungskörpers 20. Der Schneidkantenbereich ist auch wieder 0,02 mm breit. Von da ab senkt sich die Spanfläche 28 in die Einsenkung 26, im Beispielsfall unter einem Neigungswinkel von 20°, aber schon im Abstand von etwa 0,05 bis 0,3 mm von der Schneidkante 10 bildet die Spanfläche 28 eine Erhebung 30, die im wesentlichen bis zu der Ebene der Schneidkante aufragt. Hinter der Erhebung 30 senkt sich die Spanfläche 28 erneut und bis in eine größere Tiefe, um dann zum Führungskörper 20 hin wieder anzusteigen. Bei diesem kombinierten Schneidwerkzeug werden beim Feinschlichten die Späne durch die Erhebung 30 umgelenkt, während beim Schlichten und Schruppen die Späne im hinteren Bereich der Einsenkung 26 und an der Spanleitfläche 22,24 umgelenkt und gebrochen werden.

## Patentansprüche

1. Schneidwerkzeug für die spanabhebende Bearbeitung von Werkstücken, insbesondere aus Nichteisenmetallen oder Kunststoffen, dessen Schneidkante (10) und angrenzende Spanfläche (28) aus einer fest mit einer Tragschicht (16) aus Hartmetall verbundenen ultraharten Schicht (14) aus mono- oder polykristallinem Diamant oder polykristalinem Bornitrid bestehen, wobei die Spanfläche (28) hinter der Schneidkante (10) in der ultraharten Schicht (14) einen schrägen oder konkav gerundeten Abhang, einen Boden und einen Anstieg einer Einsenkung (26) bildet, die eine Tiefe von 0,1 bis 0, 5 mm unter dem Niveau der Schneidkante (10) erreicht, **dadurch gekennzeichnet, dass** die ultraharte Schicht (14) unmittelbar hinter dem Anstieg der Einsenkung (26) bis auf die Tragschicht (16) ausgespart und in der Aussparung auf der Tragschicht (16) ein Führungskörper (20) befestigt ist, der sich über die ultraharte Schicht (14) erhebt und mit einer schrägen oder konkav gerundeten Spanleitfläche (22,24) versehen ist, die sich an den den Anstieg der Einsenkung bildenden Teil der Spanfläche (28) anschließt.

2. Schneidwerkzeug nach Anspruch 1, **dadurch gekennzeichnet, dass** die Spanfläche (28) zwischen der Schneidkante (10) und dem Führungskörper (20) eine in Gleitrichtung der Späne gemessene Breite von 0,4 bis 0,6 mm hat.

3. Schneidwerkzeug nach Anspruch 1, **dadurch gekennzeichnet, dass** die Spanfläche (28) zwischen der Schneidkante (10) und dem Führungskörper (20) eine in Gleitrichtung der Späne gemessene Breite von 0,9 bis 1,2 mm hat.

4. Schneidwerkzeug nach Anspruch 3, **dadurch gekennzeichnet, dass** der in die Einsenkung (26) abfallende Teil der Spanfläche (28) im Abstand von 0,05 bis 0,3 mm von der Schneidkante (10) eine Erhebung (30) aufweist und hinter dieser weiter abfällt.

5. Schneidwerkzeug nach einem der Ansprüche 1 bis 4, **dadurch gekennzeichnet, dass** die Spanleitfläche (22,24) des Führungskörpers (20) eine mit Bezug auf die Ebene der Schneidkante (10) mindestens ebenso starke Steigung aufweist wie der angrenzende Teil der Spanfläche (28).

6. Schneidwerkzeug nach einem der Ansprüche 1 bis 5, **dadurch gekennzeichnet, dass** die Spanleitfläche (22,24) des Führungskörpers (20) mit Bezug auf die Ebene der Schneidkante (10) eine Steigung von 30 bis 60° aufweist.

7. Schneidwerkzeug nach einem der Ansprüche 1 bis 6, **dadurch gekennzeichnet, dass** die Spanleitfläche (22,24) des Führungskörpers (20) in Gleitrichtung der Späne länger ist als die Spanfläche (28) auf der ultraharten Schicht (14).

8. Schneidwerkzeug nach einem der Ansprüche 1 bis 7, **dadurch gekennzeichnet, dass** die Schneidkante (10) und die Einsenkung (26) in Draufsicht V-förmig mit gerundetem Scheitelwinkel ausgebildet sind und der Führungskörper (20) zwei Spanleitflächen (22,24) hat, deren Unterkanten sich parallel zu den Schenkeln der Schneidkante (10) erstrecken und einen gerundeten Scheitelwinkel bilden, dessen Radius dem Radius im Scheitel der Aussparung entspricht.

9. Schneidwerkzeug nach Anspruch 8, **dadurch gekennzeichnet, dass** die Unterkanten der Spanleitflächen (22,24) einen Scheitelwinkel von 40 bis 60° einschließen.

10. Schneidwerkzeug nach einem der Ansprüche 1 bis 7, **dadurch gekennzeichnet, dass** die Schneidkante (10) und die gleichmäßige oder reliefartig ungleichmäßige Einsenkung (26) in Draufsicht einen Kreisbogen von wenigstens 180° bilden und der Führungskörper (20) in einer mit Bezug auf den Umfangsabschnitt der Schneidkante (10) zentralen, runden oder sternförmigen Aussparung der ultraharten Schicht (14) auf der Tragschicht (16) befestigt ist und von seiner zur Aussparung passenden Basis aus im wesentlichen konisch ansteigt.

11. Schneidwerkzeug nach einem der Ansprüche 1 bis 7, **dadurch gekennzeichnet, dass** hinter einer geradlinigen Schneidkante (10) eine gleichmäßige oder ungleichmäßig breite oder Tiefe Einsenkung (26) und hinter dieser ein sich parallel zur Schneidkante (10) erstreckender Führungskörper (20) mit einer über das Niveau der Schneidkante (10) ansteigenden, gleichmäßigen oder ungleichmäβigen Spanleitfläche angeordnet ist.

12. Verfahren zur Herstellung eines Schneidwerkzeugs nach einem der Ansprüche 1 bis 11, **dadurch gekennzeichnet, dass** die Einsenkung (26) und die Aussparung durch Abtragen von Material der ultraharten Schicht (14) durch Elektroerosion oder mittels eines Lasers erzeugt und der Führungskörper (20) aus Hartmetall hergestellt, durch Schleifen mit wenigstens einer Spanleitfläche (22,24) versehen und durch Löten oder Kleben auf der Tragschicht befestigt wird.

## Claims

1. A cutting tool for machining workpieces, in particular of nonferrous metals or plastics, whose cutting edge (10) and adjoining cutting face (28) comprise a ultra-hard layer (14) of mono-or polycrystalline diamond or polycrystalline boron nitride, bonded firmly to a bearing layer (16) of hard metal, in which the cutting face (28), behind the cutting edge (10) in the ultra-hard layer (14) forms an oblique or concavely rounded declivity, a bottom, and a rise of a depression (26), which attains a depth of 0.1 to 0.5 mm below the level of the cutting edge (10), **characterized in that** the ultra-hard layer (14), directly behind the rise of the depression (26), is recessed as far as the bearing layer (16), and a guide body (20) is secured in the recess on the bearing layer (16), which guide body rises above the ultra-hard layer (14) and is provided with an oblique or concavely rounded chip guide face (22, 24), which adjoins the part of the cutting face (28), forming the rise of the depression.

2. The cutting tool as defined by claim 1, **characterized in that** the cutting face (28), between the cutting edge (10) and the guide body (20), has a width, measured in the sliding direction of the chips, of 0.4 to 0.6 mm.

3. The cutting tool as defined by claim 1, **characterized in that** the cutting face (28), between the cutting edge (10) and the guide body (20), has a width, measured in the sliding direction of the chips, of 0.9 to 1.2 mm.

4. The cutting tool as defined by claim 3, **characterized in that** the part of the cutting face (28) that descends into the depression (26) has a protuberance (30) at a spacing of 0.05 to 0.3 mm from the cutting edge (10), and behind that protuberance descends further.

5. The cutting tool as defined by one of claims 1 through 4, **characterized in that** the chip guide face (22, 24) of the guide body (20) has a rise with a gradient that with respect to the plane of the cutting edge (10) is at least as high as that of the adjoining portion of the cutting face (28).

6. The cutting tool as defined by one of claims 1 through 5, **characterized in that** the chip guide face (22, 24) of the guide body (20) has a rise of 30 to 60°.

7. The cutting tool as defined by one of claims 1 through 6, **characterized in that** the chip guide face (22, 24) of the guide body (20) is longer, in the sliding direction of the chips, than the cutting face (28) on the ultra-hard layer (14).

8. The cutting tool as defined by one of claims 1 through 7, **characterized in that** the cutting edge (10) and the depression (26) are embodied as V-shaped in plan view, with a rounded apex angle, and the guide body (20) has two chip guide faces (22, 24), whose lower edges extend parallel to the legs of the cutting edge (10) and form a rounded apex angle, whose radius corresponds to the radius at the apex of the recess.

9. The cutting tool as defined by claim 8, **characterized in that** the lower edges of the chip guide faces (22, 24) form an apex angle of 40 to 60°.

10. The cutting tool as defined by one of claims 1 through 7, **characterized in that** the cutting edge (10) and the uniform or in relieflike fashion nonuniform depression (26) in plan view form a circular arc of at least 180°, and the guide body (20) is secured in a with respect to the circumferential portion of the cutting edge (10) central, round or star-shaped recess of the ultra-hard layer (14) on the bearing layer (16) and rises substantially conically from its base that fits the recess.

11. The cutting tool as defined by one of claims 1 through 7, **characterized in that** behind a rectilinear cutting edge (10) a uniformly or nonuniformly wide or deep depression (26) and behind it a guide body (20), extending parallel to the cutting edge (10), are disposed with a uniform or nonuniform chip guide face rising above the level of the cutting edge (10).

12. Method for manufacturing a cutting tool as defined by one of claims 1 through 11, **characterized in that** the depression (26) and the recess are generated by removal of material from the ultra-hard layer (14) by electroerosion or by means of a laser, and the guide body (20) is provided from hard metal, is produced by grinding with at least one chip guide face (22, 24), and is secured by soldering or gluing to the bearing layer.

## Revendications

1. Outil de coupe pour un usinage par enlèvement de copeaux de pièces, notamment en des métaux non ferreux ou des matières plastiques, dont l'arête de coupe (10) et la surface de guidage de copeaux (28) adjacente sont réalisées en une couche ultra dure (14) en diamant mono-cristallin ou polycristallin ou en nitrure de bore polycristallin, cette couche étant reliée solidairement à une couche de support (16) en un métal dur, la surface de guidage de copeaux (28) formant derrière l'arête de coupe (10), dans la couche ultra dure (14), un enfoncement (26) avec une pente inclinée ou arrondie de manière concave, un fond et une remontée, cet enfoncement ayant une profondeur de 0,1 mm-0,5 mm sous le niveau de l'arête de coupe (10), outil de coupe **caractérisé en ce que** la couche ultra dure (14) est dégagée directement derrière la remontée de l'enfoncement (26) jusqu'à la couche de support (16) et un organe de guidage (20) est fixé dans le dégagement sur la couche de support (16), cet organe de guidage venant en saillie au-dessus de la couche ultra dure (14) et comportant une surface de guidage de copeaux (22, 24) inclinée ou arrondie de manière concave, et qui prolonge la partie de la surface de guidage de copeaux (28) constituant la montée de l'enfoncement.

2. Outil de coupe selon la revendication 1,
**caractérisé en ce que**
la surface de guidage de copeaux (28) a une largeur de 0,4 mm.-0,6 mm mesurée dans la direction de glissement des copeaux entre l'arête de coupe (10) et l'organe de guidage (20).

3. Outil de coupe selon la revendication 1,
**caractérisé en ce que**
la surface de guidage de copeaux (28) a une largeur de 0,9 mm-1,2 mm mesurée dans la direction de glissement des copeaux entre l'arête de coupe (10) et l'organe de guidage (20).

4. Outil de coupe selon la revendication 3,
**caractérisé en ce que**
la partie de la surface de guidage de copeaux (28) qui descend dans l'enfoncement (26) présente une partie en relief (30) à une distance de 0,05 mm-0,3 mm de l'arête de coupe (10), et après cette partie en relief continue de descendre.

5. Outil de coupe selon l'une des revendications 1 à 4,
**caractérisé en ce que**
par rapport au plan de l'arête de coupe (10), la surface de guidage de copeaux (22, 24) de l'organe de guidage (20) a une pente au moins aussi forte que la partie adjacente de la surface de guidage de copeaux (28).

6. Outil de coupe selon l'une des revendications 1 à 5,
**caractérisé en ce que**
la surface de guidage de copeaux (22, 24) de l'organe de guidage (20) a une pente de 30° à 60° par rapport au plan de l'arête de coupe (10).

7. Outil de coupe selon l'une des revendications 1 à 6,
**caractérisé en ce que**
la surface de guidage de copeaux (22, 24) de l'organe de guidage (20) est plus longue dans la direction de glissement des copeaux que la surface de guidage de copeaux (28) sur la couche ultra dure (14).

8. Outil de coupe selon l'une des revendications 1 à 7,
**caractérisé en ce que**
l'arête de coupe (10) et l'enfoncement (26) ont en vue de dessus une forme de V avec un sommet arrondi et l'organe de guidage (20) a deux surfaces de guidage de copeaux (22, 24) dont les arêtes inférieures s'étendent parallèlement aux branches de l'arête de coupe (10) et forment un angle au sommet, arrondi dont le rayon correspond au rayon du sommet du dégagement.

9. Outil de coupe selon la revendication 8,
**caractérisé en ce que**
les arêtes inférieures des surfaces de guidage de copeaux (22, 24) ont un angle au sommet de 40° à 60°.

10. Outil de coupe selon l'une des revendications 1 à 7,
**caractérisé en ce que**
l'arête de coupe (10) et l'enfoncement (26) régulier ou irrégulier en forme de relief, constituent en vue de dessus, en arc de cercle d'au moins 180° et l'organe de guidage (20) est fixé dans un dégagement rond ou en étoile, central par rapport au segment périphérique de l'arête de coupe (10), dans la couche ultra dure (14) en étant fixé sur la couche de support (16) et présente une remontée pratiquement conique à partir de sa base adaptée au dégagement.

11. Outil de coupe selon l'une des revendications 1 à 7,
**caractérisé en ce que**
derrière une arête de coupe droite (10), on a un enfoncement (26) de largeur ou de profondeur régulière ou irrégulière et derrière cet enfoncement, un organe de guidage (20) s'étendant parallèlement à l'arête de coupe (10) avec une surface de guidage de copeaux régulière ou irrégulière, remontant jusqu'au dessus du niveau de l'arête de coupe (10).

12. Procédé de réalisation d'un outil de coupe selon l'une des revendications 1 à 11,
**caractérisé en ce que**
l'enfoncement (26) et le dégagement sont réalisés par enlèvement de matière de la couche ultra dure (14) par électro érosion ou à l'aide d'un laser, et
l'organe de guidage (20) est en métal dur muni d'au moins une surface de guidage de copeaux (22, 24) réalisée par meulage et cet organe est fixe par soudage ou collage sur la couche de support.
